# EUROPEAN PATENT APPLICATION

(11) **EP 1 983 469 A1**
(43) Date of publication of application: **22.10.2008**
(21) Application number: 08007402.4
(22) Date of filing: 15.04.2008
(51) Int. Cl.: G06K 7/00, H04B 7/12

(54) **Radio communication apparatus and radio communication method**

(30) Priority: 17.04.2007 JP 2007108454
(71) Applicant: Toshiba TEC Kabushiki Kaisha, Tokyo 141-8664 (JP)
(72) Inventor: Suzuki, Shigeaki, Tokyo 141-8664 (JP)
(74) Representative: Kramer - Barske - Schmidtchen

(57) **Abstract**

Any radio channel is selected as a channel for medium communication among a plurality of radio channels and makes data communication with at least one RFID (3) by using the channel for the medium communication. Especially, it is determined whether or not the data communication with the RFID has ended normally, and if it is determined that the data communication has not ended normally, the channel for the medium communication is switched to another radio channel among the plurality of radio channels.

## Description

The present invention relates to a radio communication apparatus such as a radio-frequency identification (RFID) reader/writer configured to read RFID data and write RFID data in a non-contact manner by using electromagnetic waves, for example, in an ultra-high frequency band, and relates to its radio communication method.

In recent years, a radio communication system called an RFID system has become widely noticed. The system is composed of small-sized radio communication media each having IC chips and antennas and an RFID reader/writer which makes radio communication with the radio communication media in the use of electric fields or electromagnetic waves to write and read data in a non-contact manner.

Unique IDs such as serial numbers which have been set in manufacturing are stored on the IC chip of the RFID reader/writers. The radio communication medium may be achieved thinning and may be easily attached to an article. Therefore, the radio communication medium is called an RFID, an RF tag, a radio tag, etc., and usually attached to each article to be managed and used.

Meanwhile, the RFID reader/writer is composed of an antenna unit which transmits and receives the electric fields or electromagnetic waves to and from the radio communication media and a reader/writer main unit that is a radio communication apparatus which makes data communication with the media in a non-contact manner via the antenna unit. The reader/writer is classified into a gate-type, a stationary-type, a portable-type, etc., depending on the shape etc. of the antenna unit. The gate-type RFID reader/writer is used for an antitheft system, a gate passage management system, etc. The stationary-type RFID reader/writer is used for a lending management system for a library, a sold commodity settlement system for a store, etc. The portable-type RFID reader/writer is used for an article retrieval system for a warehouse, an inventory system for a store, etc.

In the meantime, in the RFID system, a UHF band of 860 to 960 MHz is also currently usable. However, since the UHF band is mainly used as a frequency band for a cellular phone, the UHF band (1-9 radio channels) of 952 to 954 MHz or the UHF band (1-14 radio channels) of 952 to 955 MHz in the UHF band of 860 to 960 MHz is assigned to the RFID system so that the frequency band of the RFID system and that of the cellular phone overlaps with frequency band and do not result in a disturbance of an electromagnetic wave situation.

For constructing the RFID system, in many cases, not only one reader/writer but also a plurality of reader/writers are used. Thereby, carrier sense in a listen-before-talk (LBT) system is performed so that electromagnetic waves emitted from the plurality of RFID reader/writers do not interfere with one another. The reader/writer retrieves a free radio channel before emitting an electromagnetic wave, and if any free radio channel can be detected, the reader/writer uses the free radio channel to output the electromagnetic wave (refer to, e.g., Jpn. Pat. Appln. KOKAI Publication No. 2000-242742).

In such a radio communication system, generally, a communication error such as a missing-bit error or a bit-change error occur. In the case of the occurrence of such a communication error, most of the conventional radio communication apparatuses retry to make radio communication in the use of the same frequency, and notify the communication errors if data communication has not completed after repeating the radio communication by the prescribed number of times.

However, in many cases, the communication error such as a missing-bit error or a bit-change error occur caused by an influence of noise in the case in which other radio communication apparatuses use frequencies close to the frequency which has been used as a channel for medium communication. In this case, since the influence of the noise has not been able to be eliminated even by retrying the radio communication in the use of the same frequency, there is every possibility of an error occurring again.

An object of an aspect of a radio communication apparatus of the present invention is to avoid a communication error caused by noise which may be generated in the case where other radio communication apparatuses has used frequencies close to the frequency used for a channel for medium communication and to enhance communication efficiency.

According to one aspect of the invention, there is provided a radio communication apparatus which selects any radio channel as a channel for medium communication from among a plurality of radio channels and makes data communication with at least one radio communication medium by using the channel for the medium communication, comprising: result determination means for determining whether or not the data communication with the radio communication medium has ended normally; and channel switching means for switching the channel for the medium to another radio channel among the plurality of radio channels if it is determined by the result determination means that the data communication has not ended normally.

The invention can be more fully understood from the following detailed description when taken in conjunction with the accompanying drawings, in which:
FIG. 1 is a view depicting an exemplary RFID system using an RFID reader/writer regarding each embodiment of the invention;
FIG. 2 is a block diagram depicting am exemplary configuration of a principal part of the RFIF reader/writer regarding each embodiment of the invention;
FIG. 3 is a view depicting an exemplary principal memory area formed on a storage unit of the RFID reader/writer regarding each embodiment of the invention;
FIG. 4 is a flowchart depicting an exemplary read command reception processing regarding the first embodiment of the invention;
FIG. 5 is a flowchart depicting exemplary write command reception processing regarding the first embodiment of the invention;
FIG. 6 is a flowchart depicting exemplary read command reception processing regarding the second embodiment of the invention; and
FIG. 7 is a flowchart depicting an exemplary write command reception processing regarding the second embodiment of the invention.

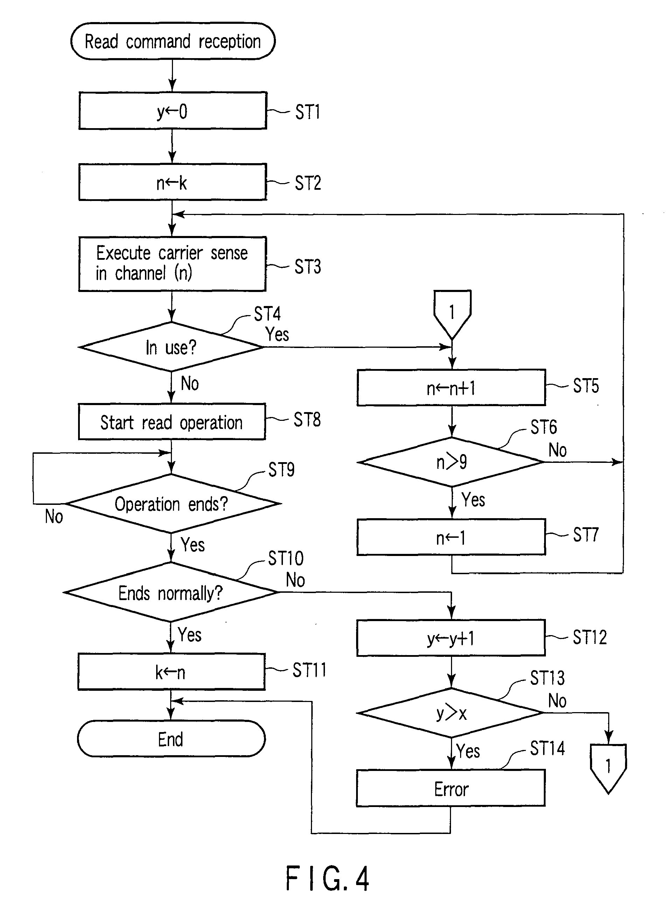

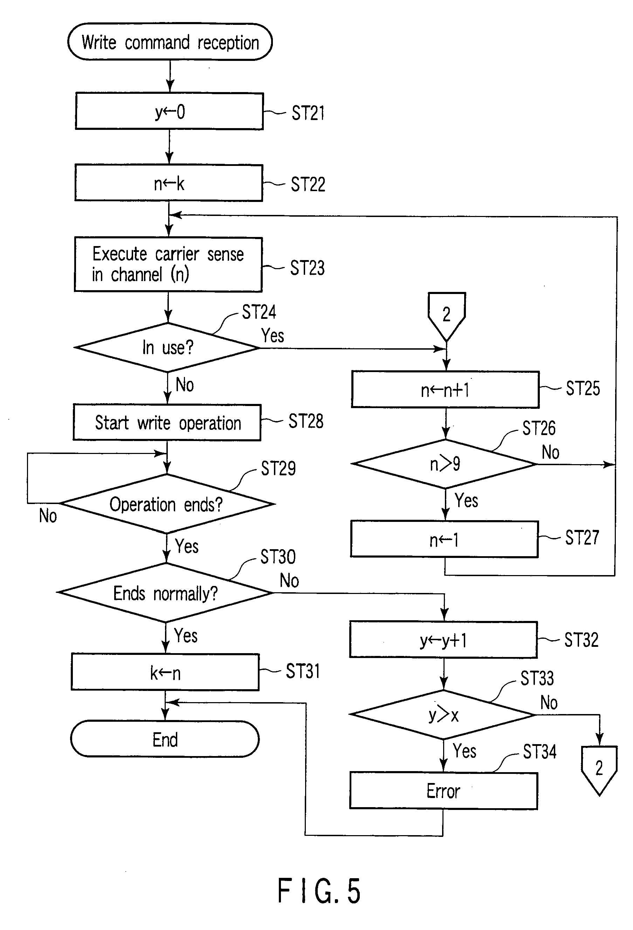

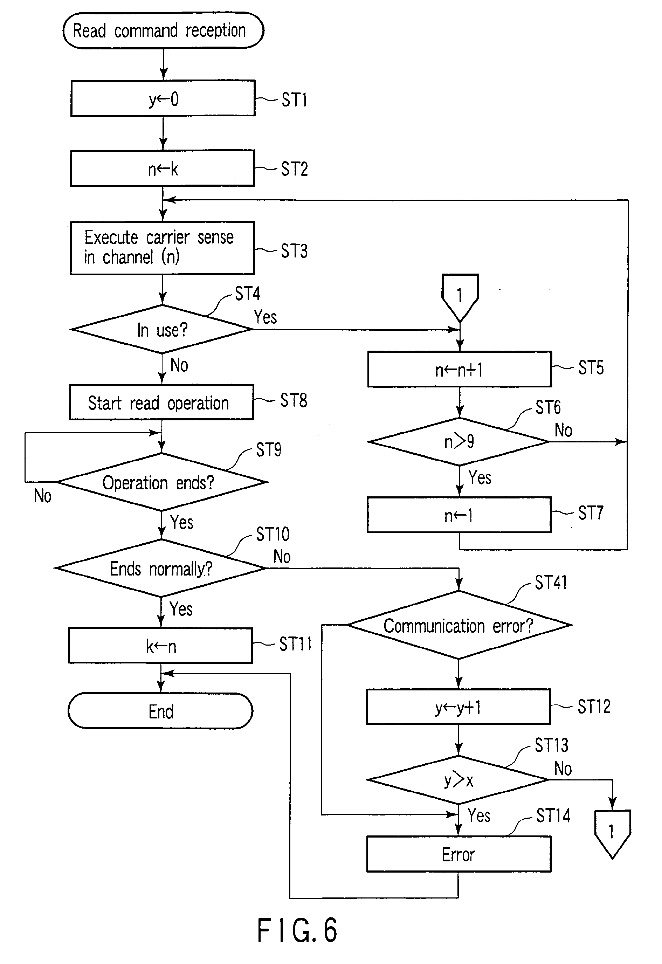

[1] Hereinafter, the first embodiment of the present invention will be described.
   The first embodiment shows the case in which the invention is applied to an RFID reader/writer configured to read data stored in a memory of an RFID and to write data to the memory by making radio communication with the RFID that is a radio communication medium by use of a UHF band (1-9 radio channels) of 952 to 954 MHz.

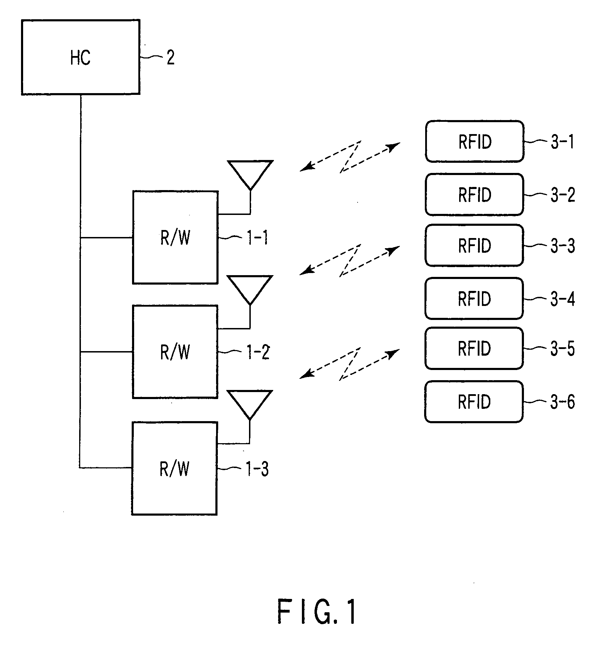

   FIG. 1 shows a schematic view of an RFID system using the RFID reader/writer. The system is composed of a plurality of RFID reader/writers 1 (FIG. 1 shows only three RFID reader/writers 1-1, 1-2 and 1-3), a host computer 2 that is a high-order device for controlling the RFID reader/writers 1, and a plurality of RFIDs 3 (FIG. 1 shows only six RFIDs 3-1, 3-2, 3-3, 3-4, 3-5 and 3-6) of which the data is read and written by each reader/writer 1.
   Each RFID 3 has an antenna and an IC chip. The IC chip is provided with a power source generator, a demodulator, a modulator, a memory unit and a control unit controlling those components. When receiving an electromagnetic wave in a UHF band, each RFID 3 generates a power source voltage through the operation of the generator and each of the RFIDs 3 is activated. The activated RFID 3 emits a response wave including a peculiar ID stored in the memory unit. When the RFID reader/writer 1 which has received this response wave is connected to a line wirelessly, after this, the RFID 3 demodulates to write the received data to the memory unit and reads to modulate the data in the memory unit, and transmits the data to the RFID reader/writer 1 in response to a command from the RFID reader/writer 1. Such RFIDs 3 are usually attached to the respective articles to be managed and are used individually.

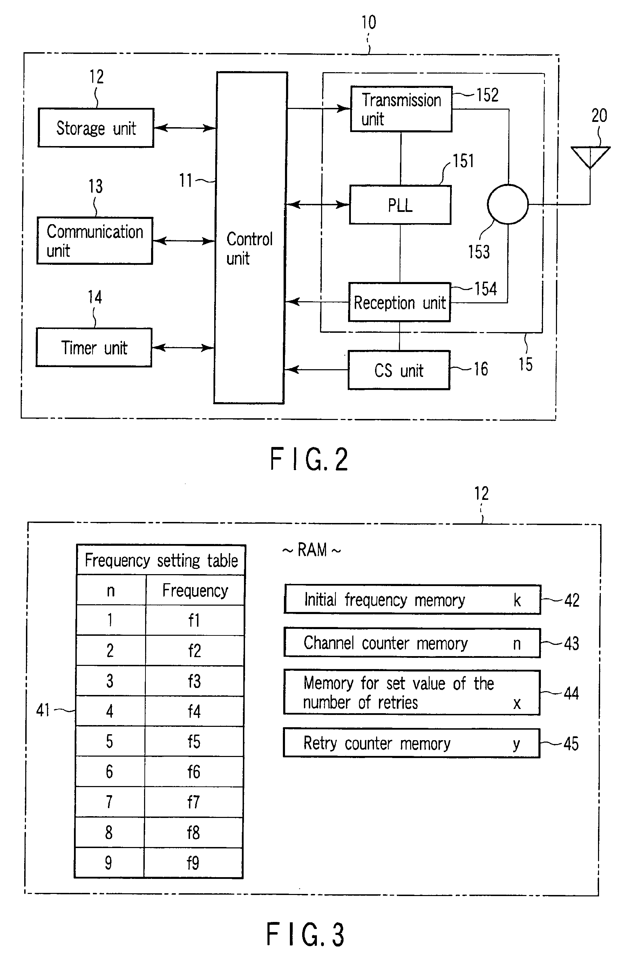

   FIG. 2 shows a block diagram illustrating the principal configuration of the RFID reader/writer 1. The RFID is composed of a main unit 10 and an antenna 20 connected with the main unit 10.
   The main unit 10 includes a control unit 11 mainly configured by a central processing unit (CPU), a storage unit 12 having a read only memory (ROM) area and a random access memory (RAM) area, a communication unit 13 for making data communication with an external device such as a host computer 2, a timer unit 14 in which a timer for each counting a monitoring time, an operation control time, etc., to be mentioned below, a radio circuit unit 15 for controlling transmission and reception of the data wirelessly, and a carrier sense unit 16.
   The radio circuit unit 15 is composed of a phase locked loop (PLL) circuit 151, a transmission unit 152, a circulator 153 and a reception unit 154. The PLL circuit 151 generates a high-frequency sine wave. The transmission unit 152 modulates transmission data transmitted from the control unit 11, amplifies the signal in which the modulated signal and the high-frequency signal generated from the PLL circuit 151 are combined with each other and outputs the amplified signal to the circulator 153. The circulator 153 has characteristics of outputting the signal input from the transmission unit 152 to the antenna 20 and outputting the signal input from the antenna 20 to the reception unit 154. The reception unit 154 amplifies the high-frequency signal input through the circulator 153, combines the amplified high-frequency signal with the high-frequency signal generated from the PLL circuit 151 to convert the combined signal into a base band signal, and then, demodulates the base-band signal to output the demodulated signal to control unit 11.
   The carrier sense unit 16 determines the use situation of the radio channels (1-9 radio channels of 952 to 954 MHz) in the UHF band to be used by the reader/writer 1 by means of the carrier sense in the LBT system. In the LBT system, an operable time period for a single operation of the reader/writer 1 is limited by four seconds at a maximum. After completing the single operation, the reader/writer 1 stops its operation for 50 ms then monitors free channels for 5 ms, and only after this, the reader/writer 1 becomes operable again.
   A frequency setting table 41, an initial frequency memory 42, a channel counter memory 43, a memory 44 for a set value of the number of retries, and a retry counter memory 45 are formed in the RAM area of the storage unit 12, as shown in FIG. 3.
   In the frequency setting table 41, any of frequencies f1-f9 in the UHF band of 952-954 MHz is preset respectively corresponding to the channel number (n) of the radio channels 1-9 to be used by the RFID system.
   A channel number (n) corresponding to one frequency selected from the frequencies f1-f9 which have been set in the setting table 41 is stored as an initial frequency k in the initial frequency memory 42. In the RFID system equipped with the plurality of RFID reader/writers 1 shown in FIG. 1, the frequencies are selected from among the frequencies f1-f9 so that the RFID reader/writers 1 at least adjacent to each other are different in frequency.
   The channel counter memory 43 stores a numeric value 'n' to be incremented by '1' within a range of the channel numbers (n). The memory 44 for the set value of the number of retries stores the number x of retries to be set by the setting command from the host computer 2. As for the number x of retries, a natural number in the range of '1' to '5' is appropriate, generally. The number y of retries of data communication is stored in the retry counter memory 45.
   In the RFID system with the RFID reader/writer 1 of such a configuration used therein, when data reading processing for the RFID 3 occurs, the host computer 2 transmits a read command to any of the RFID reader/writers 1. The control unit 11 of the RFID reader/writer 1 which has received the read command executes the processing shown in FIG. 4.
   At first, the count value y of the retry counter memory 45 is rest to '0' (Step ST1). The initial frequency k stored in the initial frequency memory 42 is set as the count value 'n' of the channel counter memory 43 (Step ST2).
   Next to this, the carrier sense is executed so as to retrieve the frequency fn to be specified by the same channel number (n) as the count value 'n' in the channel counter memory 43 among the frequency fn (f1 ≤ fn ≤ f9) on the frequency setting table 41 (Step ST3). In other words, the monitoring timer in the timer unit 14 is activated, and the monitoring timer determines whether or not the signal of the frequency fn has been received by the reception unit 154 by means of the CS signal to be read from the carrier sense unit 16 for a time period (5 ms in the LTB system) until the monitoring timer times out. When the signal of the frequency fn has not been received by the reception unit 154, the CS signal level becomes '0' (in no use of frequency fn), and when the signal has been received thereby, the CS signal level becomes '1' (in use of frequency fn). Based on the CS signal, it is determined whether the frequency is in use or not (Step ST4).
   If the CS signal level is '1', it is determined that the channel is one in which the frequency fn is in use (YES in Step ST4), the count value 'n' in the channel counter memory 43 is incremented by '1' (Step ST5). It is determined whether the count value 'n' has exceeded the maximum value '9' of the channel number (Step ST6). If the count value 'n' has exceeded the maximum value '9' of the channel number (YES in Step ST6), the count value 'n' is returned to '1' (Step ST7). After this, the control unit 11 returns to the processing in Step ST3, and repeats executing the carrier sense.
   If the CS signal level is '0', it is determined that the frequency fn belongs to a free channel (NO in Step ST4), the control unit 11 starts to read the RFID 3 by using the frequency fn in the free channel (Step ST8). That is, the operation restricting timer of the timer unit 14 is started and the radio communication through the frequency fn is made with the RFID 3 which is present within the communication area of the antenna 20 to read the data from the RFID 3. The operation restricting timer times out when it reaches the maximum operable time period 4s in the LBT system.
   After starting the read operation, the end of the read operation is monitored (Step ST9). If the read operation ends (YES in Step ST9), it is determined whether or not the data has been read normally from the desired RFID 3 (Step ST10; result determination means).
   Here, the data is read from the desired RFID 3, when the read data is surely transmitted to the host computer 2 through the data communication unit 13, it is determined that the read operation has ended normally (YES in Step ST10). In this case, the count value 'n' at the current time point in the channel counter memory 43 is overwritten as the initial frequency k of the next time in the initial frequency memory 42 (Step ST11), and the command reception processing at this time normally ends. Therefore, in the command processing at the next time, the operation to and from other RFID reader/writers 1 may be started by the frequency with less electromagnetic wave interference.
   In contrast, if the data has not been read normally from the desired RFID 3, or the operation restricting timer times out and the read operation is interrupted, it is determined that the read operation has not ended normally (NO in Step ST10), the count value y of the retry counter memory 45 is incremented by '1' (Step ST12). The control unit 11 then determines whether or not the count value y has exceeded the set value x stored in the memory 44 for the set value of the number of retries (Step ST13).
   If the count value y has not exceeded the set value x (NO in Step ST13), the control unit 11 returns to the processing in Step ST 5, and the count value 'n' in the channel counter memory 43 is incremented by '1'. The control unit 11 then determines whether or not the count value 'n' has exceeded the maximum value '9' of the channel number (Step ST6). If the count value 'n' has exceeded the maximum value '9' of the channel number (YES in Step ST6), the count value 'n' is returned to '1' (Step ST7). After this, the control unit 11 returns to the processing in Step ST3, obtains another frequency fn from the frequency setting table 41 and repeats the carrier sense to retrieve another frequency fn (channel switch means).
   As the result of this carrier sense, if the obtained frequency fn is in the free radio channel (NO in Step ST4), the control unit 11 uses the frequency fn in the free radio channel to retry the read operation for the RFID 3 (Step ST8: retry means).
   In the determination in Step ST13, if the count value y has reached the set value x (YES in Step ST13), the command reception processing at this time has ended as an error (Step ST14: error end means).
   As regards an example in which it is determined that the read operation has not ended normally in Step ST10, there is a case in which the RFID 3 is present outside the communication area of the antenna 20 or the response signal may not be received from the RFID 3 because something is the matter with the RFID 3. As regards an example in which it is determined that the read operation has not ended normally, there is a case in which a missing-bit error or bit-change error occurs during data communication for reading the data stored in the RFID 3 even if the response signal has been received from the RFID 3 and the presence of the RFID 3 in the communication area of the antenna 20 has been detected. Further, as regards an example in which it is determined that the read operation has not ended normally, also there is a case in which it takes a lot of time for the data communication and the operation restricting timer times out.
   The following will describe the case of an occurrence of data writing processing in the RFID 3. In the RFID system of the embodiment, when the data writing processing occurs, the host computer 2 transmits the write command to any of the RFID reader/writers 1. The control unit 11 of the RFID reader/writer 1 which has received the write command executes the processing shown in the flowchart of FIG. 5.
   Firstly, the count value y in the retry counter memory 45 is reset to '0' (Step ST21). The count value 'n' in the channel counter memory 43 is set as the initial frequency k in the initial frequency memory 42 (Step ST 22).
   The control unit 11 executes the carrier sense for retrieving the frequency fn to be specified by the same channel number (n) as the count value 'n' in the channel counter memory 43 among the frequency fn (f1 ≤ fn ≤ f9) on the frequency setting table 41 (Step ST23). The monitoring timer of the timer unit 14 is activated and it is determined by the CS signal to be read from the carrier sense unit 16 whether or not the signal of the frequency fn has been received by the reception unit 154 for the time period (5 ms in the LTB system) until the monitoring timer times out. If the signal of the frequency fn has not been received by the reception unit 154, the CS signal level becomes '0' (in no use of frequency fn), and if the signal has been received thereby, the CS signal level becomes '1' (in use of frequency fn). Based on the CS signal, it is determined that the frequency fn is in use or not (Step ST24).
   If the CS signal level is '1', it is determined that the frequency fn is in the radio channel being in use (YES in Step ST24), the count value 'n' of the channel counter memory 43 is incremented by '1' (Step ST25). The control unit 11 determines whether or not the count value 'n' has exceeded the maximum value '9' of the channel number (Step ST26). If the count value 'n' has exceeded the maximum value '9' of the channel number thereof (YES in Step ST26), the count value 'n' is returned to '1' (Step ST 27). After this, the control unit 11 returns to the processing in Step ST23 and repeats the carrier sense.
   In the case of CS signal level '0', the control unit 11 determines that the frequency fn is in the free radio channel (NO in Step ST24), uses the frequency fn in the free radio channel, and starts the write operation for the RFID 3 (Step ST28). In other words, the operation restricting timer of the timer unit 14 is started, the radio communication by the frequency fn is made with the RFID 3 which is present in the communication area of the antenna 20, and the data is written to the RFID 3. In the LBT system, the operation restricting timer times out when it reaches the maximum operable time period 4s.
   After starting the write operation, the end of the write operation is monitored (Step ST29). When the write operation ends (YES in Step ST29), the control unit 11 determines whether or not the write operation has ended normally, namely whether or not the data has been written normally in a non-contact manner to the desired RFID 3 (Step ST30: result determination means).
   Here, if the data received from the host computer 2 has been accurately written to the memory of the desired RFID 3, it is determined that the write operation has ended normally (YES in Step ST30). In this case, the count value 'n' in the channel counter memory 43 at this current time point is overwritten as the initial frequency k for the next time in the initial frequency memory 42 (Step ST 31), and the command reception processing at this time ends normally.
   In contrast, if the data has not been written normally to the desired RFID 3, or if the operation restricting timer times out to interrupt the write operation, under the determination that the write operation has not ended normally (NO in Step ST30), the count value y in the retry counter memory 45 is incremented by '1' (Step ST32). The control unit 11 determines that whether or not the count value y has exceeded the set value x stored in the memory 44 for the set value of the number of retries (Step ST 33).
   Here, if the count value y has not exceeded the set value x (NO in Step ST33), the control unit 11 returns to the processing in Step ST25, and increments the count value 'n' in the channel counter memory 43 by '1'. The control unit 11 determines whether or not the count value 'n' has exceeded the maximum value '9' of the channel number (step ST36). If the count number 'n' has exceeded the maximum value '9' of the channel number thereof (YES in Step ST36), the count value 'n' is returned to '1' (Step ST 37). After this, the control unit 11 returns to the processing in Step ST23, obtains another frequency fn from the frequency setting table 41 and repeats the carrier sense for retrieving the frequency fn (channel switching means).
   Thus, as the result of the carrier sense, if it is detected that the obtained frequency fn is in the free radio channel (NO in Step ST24), the control unit 11 uses the frequency fn in the free radio channel and retries the write operation for the RFID 3 (step ST28; retry means).
   In the determination in Step ST33, if the count value y has reached the set value x (YES in Step ST33), the control unit 11 ends the command reception processing at this time as an error (step ST34: error end means).
   In Step ST30, as regards an example in which it is determined that the write operation has not ended normally, there is a case in which the RFID 3 is present outside the communication area of the antenna 20 or the RFID is out of order then the response signal has not been received from the RFID 3. As regards an example in which it is determined that the write operation has not ended normally, there is a case in which a missing-bit error or bit-change error occurs during data communication for writing the data to the RFID 3 even when the response signal is received from the RFID 3 and it is detected that the RFID 3 is present in the communication area of the antenna 20. Further, as regards an example in which it is determined that the write operation has not ended normally, there is a case in which it takes a lot of time for the data communication and the operation restricting timer times out.
   Like this, when receiving the read command or the write command for the RFID 3, the RFID reader/writer 1 executes the carrier sense, retrieves the frequency in the free radio channel from among prepared frequencies f1-f9, uses the frequency in the retrieved free radio channel and executes the read operation or the write operation of the data from and to the desired RFID 3.
   If it is impossible for the read operation or the write operation to be completed correctly, the RFID reader/writer 1 retries the read operation or write operation within the prescribed number x of retries. At this moment, the RFID reader/writer 1 executes the carrier sense to retrieve the frequency of the free radio channel and uses the frequency in the retrieved free radio channel.
   Accordingly, if the cause, by which the RFID reader/writer 1 is not enabled to complete normally the read operation or the write operation, results from the noise which is possibly generated in the case in which other RFID reader/writers 1 have used the frequencies close to the frequency which was used just before by the RFID reader/writer 1, since the communication frequency in retrying changes, there is every possibility that the RFID reader/writer 1 may avoid the communication error. As a result, excellent communication efficiency may be achieved.
[2] The second embodiment of the invention will be described. The configuration of the hardware is the same as that of the first embodiment thereof, so that the detailed description will be omitted.
   The second embodiment differs from the first embodiment in some parts of each of the processing of the control unit 11 regarding the RFID reader/writers 1 in receiving the read commands and the write commands. FIG. 6 shows a flowchart illustrating the processing when the control unit 11 receives the read command, and the same components as those of FIG. 3 are designated by the identical symbols.
   If it is determined that the read operation has not ended normally (NO in Step ST10), it is determined whether or not the abnormal end is caused by the error in the data communication, for reading the data recorded in the RFID 3, which is performed after receiving the response signal from the RFID 3 (Step ST41: error determination means). The error in the data communication represents the case in which a missing-bit error or bit-change error occurs during the data communication for reading the data stored in the RFID 3, or the case in which the operation restricting timer times out because it takes a lot of time for the data communication, even if the response signal from the RFID 3 has been received and the presence of the RFIS 3 in the communication area of the antenna 20 has been detected.
   If it is determined that the abnormal end of the read operation is caused by the error in the data communication (YES in Step ST41), the read operation is retried in the same way of the first embodiment. The count value y of the retry counter memory 45 is incremented by '1' (Step ST12). If the count value y has not exceeded the set value x stored in the memory 44 for the set value of the number of retries (NO in Step ST13), the count value 'n' of the channel counter memory 43 is incremented by '1' in turn, and the carrier sense for retrieving another frequency fn (channel switching means). When the frequency fn in the free radio channel is detected, the read operation using the frequency fn in the detected free radio channel is re-started.
   If the abnormal end of the read operation is not caused by the error in the data communication (NO in Step ST41), for example, if it is impossible for the RFID 3 to be detected, the retry is not performed, and the command reception processing in this time is ended as an error (Step ST14: error end means).

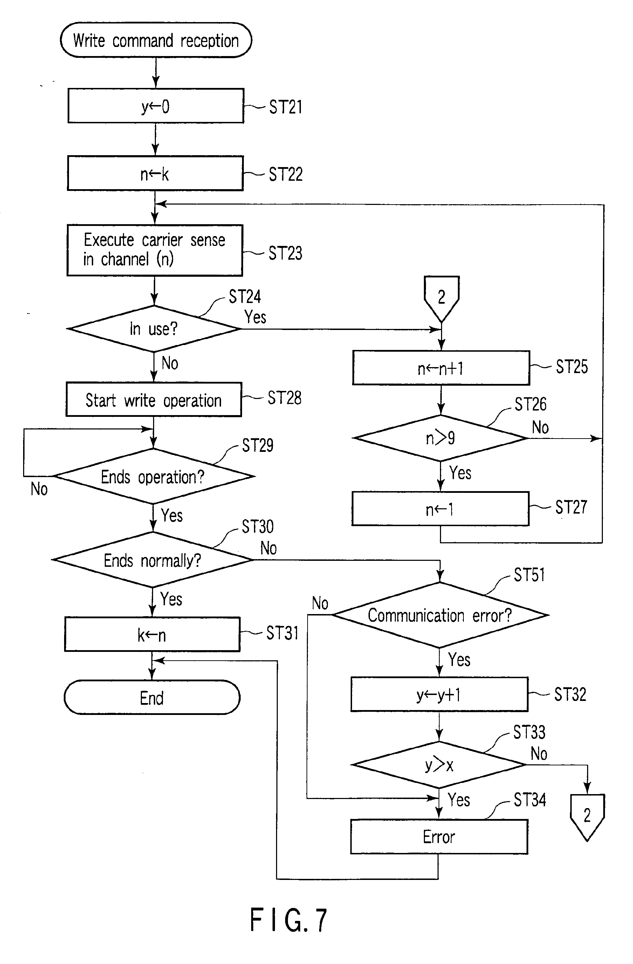

   FIG. 7 shows a flowchart depicting the processing when the control unit 11 receives the read command, and the same components as those of the processing in the first embodiment are designated by the identical symbols.
   If the control unit 11 determines that the write operation has not ended normally (NO in Step ST30), the control unit 11 determines whether or not the abnormal end is caused by the error in the data communication, for writing the data to the RFID 3, which is performed after receiving the response signal from the RFID 3 (Step ST51: error determination means). The error in the data communication represents the case in which a missing-bit error or bit-change error occurs during the data communication for reading the data stored in the RFID 3, or the case in which the operation restricting timer times out because it takes a lot of time for the data communication even if the response signal from the RFID 3 has been received and the presence of the RFIS 3 in the communication area of the antenna 20 has been detected.
   If it is determined that the abnormal end of the read operation is caused by the error in the data communication (YES in Step ST51), the read operation is retired in the same way of the first embodiment. The count value y of the retry counter memory 45 is incremented by '1'. If the count value y has not exceeded the set value x stored in the memory 44 for the set value of the number of retries, the count value 'n' of the channel counter memory 43 is incremented by '1' in turn, and the carrier sense for retrieving another frequency fn (channel switching means). When the frequency fn in the free radio channel is detected, the read operation using the frequency fn in the detected free radio channel is re-started.
   If the abnormal end of the read operation is not caused by the error in the data communication (NO in Step ST51), for example, if it is impossible for the RFID 3 to be detected, the retry is not performed, and the command reception processing in this time is ended as an error (Step ST34: error end means).
   Like this, in the second embodiment, it is determined whether or not the reading error or writing error is caused by the error in the data communication, executes the retry only when the error is caused by the error in the data communication, and if the error is caused by other errors, the retry is not executed to end the processing as an error.
   In generally, the case in which the data is not be read because of the error in the data communication may be caused by the noise generated from the case where other RFID reader/writers 1 have used the frequencies close to the used frequency fn. Therefore, there is every possibility that the communication error may be avoided by switching the communication frequency in retrying to other frequencies.
   In contrast, if the fact that the data is not be read is caused by other than the error in the data communication, but caused by the fact that, for example, the RFID 3 may not be detected, the error may not be avoided by executing retries. In such a situation, the second embodiment does not execute the retries at the start, but intends to reduce the time and the processing burden to be needed for the useless retries.
[3] Modified example
   While each of the foregoing embodiment has described the example of the case in which the radio communication apparatus makes communication by using the electromagnetic waves in the UHF band (1-9 radio channels) of 952 to 954 MHz, the band of the frequencies to be used is not limited, and electromagnetic waves, for example, in the UHF band (1-14 radio channels) of 952 to 955 MHz may be used.
   While each of the aforementioned embodiments has executed the retries accompanied by switching frequencies in both the reception of the read command and the write command, the radio communication apparatus may execute retries accompanied by switching frequencies in only either the reception of the read command or the reception of the write command.
   While each of the foregoing embodiment has described the case of using the passive-type RFID 3 not having the function of transmitting the data by itself, the radio communication apparatus may use, for example, an active-type RFID 3 having the function of transmitting the data by itself.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A radio communication apparatus which selects any radio channel as a channel for medium communication from among a plurality of radio channels and makes data communication with at least one radio communication medium (3) by using the channel for the medium communication, **characterized by** comprising:
result determination means (ST10, ST30) for determining whether or not the data communication with the radio communication medium (3) has ended normally; and
channel switching means (ST5, ST6, ST7, ST3, ST25, ST26, ST27, ST23) for switching the channel for the medium to another radio channel among the plurality of radio channels if it is determined by the result determination means (ST10, ST30) that the data communication has not ended normally.

2. The apparatus according to claim 1, **characterized by** further comprising:
retry means (ST8, ST28) for retying data communication with the radio communication medium by using the radio channel switched by the channel switching means.

3. The apparatus according to claim 1, **characterized by** further comprising:
error determination means (ST41, ST51), wherein:
when it is determined by the result determination means (ST10, ST30) that the data communication has not ended normally, the error determination means (ST41, ST51) determines whether or not the fact that the data communication has not ended normally is caused by an error in the data communication with the radio communication which has been performed after receiving a response signal from the radio communication medium (3), and
the channel switching means (ST5, ST6, ST7, ST3, ST25, ST26, ST27, ST23) switches the channel for the medium communication to another radio channel among the plurality of radio channels when the determination result is affirmative.

4. The apparatus according to claim 1,
**characterized in that**
the result determination means (ST10, ST30) determines whether or not a read operation for reading data from the radio communication medium in a non-contact manner has ended normally.

5. The apparatus according to claim 4, **characterized by** further comprising:
retry means (ST8) for retrying the read operation by using the radio channel switched by the channel switching means (ST5, ST6, ST7, ST3).

6. The apparatus according to claim 4, **characterized by** further comprising:
error determination means (ST41), wherein:
when it is determined by the result determination means (ST10) determines that the data communication has not ended normally, the error determination means (ST41) determines whether or not the fact that the data communication has not ended normally is caused by an error in the data communication with the radio communication which has been performed after receiving a response signal from the radio communication medium (3), and
the channel switching means (ST5, ST6, ST7, ST3) switches the channel for the medium communication to another radio channel among the plurality of radio channels when the determination result is affirmative.

7. The apparatus according to claim 1,
**characterized in that**
the result determination means (ST30) determines whether or not a write operation of data to the radio communication medium in a non-contact manner has ended normally.

8. The apparatus according to claim 7, **characterized by** further comprising:
retry means (ST28) for retrying the write operation by using the radio channel switched by the channel switching means (ST25, ST26, ST27, ST23).

9. The apparatus according to claim 7, **characterized by** further comprising:
error determination means (ST51), wherein:
when it is determined by the result determination means (ST30) determines that the data communication has not ended normally, the error determination means (ST34) determines whether or not the fact that the data communication has not ended normally is caused by an error in the data communication with the radio communication which has been performed after receiving a response signal from the radio communication medium (3), and
the channel switching means (ST25, ST26, ST27, ST23) switches the channel for the medium communication to another radio channel among the plurality of radio channels when the determination result is affirmative.

10. A radio communication apparatus which selects any radio channel as a channel for medium communication from among a plurality of radio channels and makes data communication with at least one radio communication medium by using the channel for the medium communication, **characterized by** comprising:
a result determination section (ST10, ST30) which determines whether or not the data communication with the radio communication medium (3) has completed normally; and
a channel switching section (ST5, ST6, ST7, ST3, ST25, ST26, ST27, ST23) which switches the channel for the medium to another radio channel among the plurality of radio channels if it is determined by the result determination section (ST10, ST30) that the data communication has not ended normally.

11. The apparatus according to claim 10, **characterized by** further comprising:
a retry section (ST8, ST28) which retries data communication with the radio communication medium by using the radio channel switched by the channel switching section.

12. The apparatus according to claim 10, **characterized by** further comprising:
an error determination section (ST41, ST51), wherein:
when it is determined by the result determination section (ST10, ST30) determines that the data communication has not ended normally, the error determination section (ST41, ST51) determines whether or not the fact that the data communication has not ended normally is caused by an error in the data communication with the radio communication that is performed after receiving a response signal from the radio communication medium (3), and
the channel switching section (ST5, ST6, ST7, ST3, ST25, ST26, ST27, ST23) switches the channel for the medium communication to another radio channel among the plurality of radio channels when the determination result from the error determination section (ST41, ST51) is affirmative.

13. A radio communication method which selects any radio channel as a channel for medium communication from among a plurality of radio channels and makes data communication with at least one radio communication medium (3) by using the channel for the medium communication, **characterized by** comprising:
determining (ST10, ST30) whether or not the data communication with the radio communication medium (3) has ended normally; and
switching (ST5, ST6, ST7, ST3, ST25, ST26, ST27, ST23) the channel for the medium to another radio channel among the plurality of radio channels if it is determined by the determining (ST10, ST30) that the data communication has not ended normally.

14. The method according to claim 13, **characterized by** further comprising:
retrying (ST8, ST28) data communication with the radio communication medium by using the radio channel switched by the switching of the channel.

15. The method according to claim 13, **characterized by** further comprising:
determining (ST10, ST30), wherein:
when it is determined that the data communication has not ended normally,
the determining (ST10, ST30) determines whether or not the fact that the data communication has not ended normally is caused by an error in the data communication with the radio communication which is performed after receiving a response signal from the radio communication medium (3), and
the switching (ST5, ST6, ST7, ST3, ST25, ST26, ST27, ST23) switches the channel for the medium communication to another radio channel among the plurality of radio channels when the determination result of the error is affirmative.
